(19) Europäisches Patentamt / European Patent Office / Office européen des brevets

(11) **EP 4 692 765 A1**

(12) **EUROPEAN PATENT APPLICATION**

(43) Date of publication:
**11.02.2026 Bulletin 2026/07**

(21) Application number: **25194639.8**

(22) Date of filing: **07.08.2025**

(51) International Patent Classification (IPC):
**G01N 21/552** $^{(2014.01)}$    **G02B 6/122** $^{(2006.01)}$

(52) Cooperative Patent Classification (CPC):
**G01N 21/552; G02B 6/122;** G01N 2201/0846;
G02B 2006/12138

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.08.2024 US 202418798648**

(71) Applicant: **Microsoft Technology Licensing, LLC
Redmond, WA 98052-6399 (US)**

(72) Inventors:
• **KARAGIANNIS, Thomas
  Redmond, 98052-6399 (US)**
• **PANTOUVAKI, Maria Ioanna
  Redmond, 98052-6399 (US)**

(74) Representative: **Page White Farrer
Bedford House
21a John Street
London WC1N 2BF (GB)**

(54) **ANALYTE SENSING IN A FLUID MEDIUM**

(57)    A method for fabricating a sensor comprises: (a) providing a wafer comprising a substrate, a dielectric layer on the substrate, and a semiconductor adlayer on the dielectric layer; (b) enacting microlithographic processing on the semiconductor adlayer to define: (i) a curved and elongate semiconductor waveguide confined to the dielectric layer, (ii) an in-coupling window arranged at a first end of the waveguide and configured to couple optically to an optical source, and (iii) an out-coupling window arranged at a second end of the waveguide and configured to couple optically to an optical detector; and (c) selectively etching the dielectric layer to define: (iv) a first dielectric region that supports and encloses the first end of the waveguide; (v) a second dielectric region that supports and encloses the second end of the waveguide; and (vi) a third dielectric region that supports but does not enclose a middle segment of the waveguide.

FIG. 1

**Description**

BACKGROUND

Optical absorption sensing can be used as an analytical tool to quantify trace gases in the atmosphere. In any optical-absorption method, the sensitivity of analyte detection depends on the path length L over which the probe light interacts with the analyte-containing medium. This limitation comes from the familiar Beer-Lambert Law,

$$\delta \log(I / I_0) = E\, L\, \delta C,$$

where I is the intensity of the probe light after the interaction, $I_0$ is the intensity before the interaction, E is the extinction coefficient of the analyte, and C is the concentration of the analyte.

In order to provide ever greater path lengths for atmospheric trace-gas determinations, sophisticated methods, such as cavity ring-down spectroscopy have been developed. In this technique, the probe light bounces back and forth between mirrors that can be spaced meters apart, resulting in a very great path length. Cavity ring-down spectrometers are large and expensive, however, and require expert handling to provide reliable determinations.

SUMMARY

One aspect of this disclosure relates to a sensor for sensing an analyte in a fluid medium. The sensor comprises a dielectric layer, a curved and elongate semiconductor waveguide, an in-coupling window, and an out-coupling window. The waveguide is confined to an area of the dielectric layer and is at least twenty times as long as the area. The in-coupling window is arranged at a first end of the waveguide and configured to couple optically to an optical source. The out-coupling window is arranged at a second end of the waveguide and configured to couple optically to an optical detector.

Another aspect of this disclosure relates to a method for fabricating a sensor. The method comprises: (a) providing a wafer comprising a substrate, a dielectric layer on the substrate, and a semiconductor adlayer on the dielectric layer; (b) enacting microlithographic processing on the semiconductor adlayer to define: (i) a curved and elongate semiconductor waveguide confined to the dielectric layer, (ii) an in-coupling window arranged at a first end of the waveguide and configured to couple optically to an optical source, and (iii) an out-coupling window arranged at a second end of the waveguide and configured to couple optically to an optical detector; and (c) selectively etching the dielectric layer to define: (iv) a first dielectric region that supports and encloses the first end of the waveguide; (v) a second dielectric region that supports and encloses the second end of the waveguide;

and (vi) a third dielectric region that supports but does not enclose a middle segment of the waveguide, to suspend the middle segment of the waveguide.

Another aspect of this disclosure relates to a sensor for sensing an analyte in a fluid medium. The sensor comprises a dielectric layer, a curved and elongate semiconductor waveguide, an in-coupling window, and an out-coupling window. The dielectric layer includes (a) a sensory region that supports but does not enclose a middle segment of the waveguide, (b) a groove, wider than the waveguide, formed along a path of the middle segment of the waveguide, over the sensory region, and (c) at least one ridge arranged in the groove, each ridge extending across the groove, adherently supporting the middle segment of the waveguide. The in-coupling window is arranged at a first end of the waveguide and configured to couple optically to an optical source. The out-coupling window is arranged at a second end of the waveguide and configured to couple optically to an optical detector.

This Summary is provided in order to introduce in simplified form a selection of concepts that are further described in the Detailed Description. This Summary is not intended to identify key features or essential features of the claimed subject matter, nor is it intended to be used to limit the scope of the claimed subject matter. The claimed subject matter is not limited to implementations that solve any disadvantages noted in any part of this disclosure.

BRIEF DESCRIPTION OF THE DRAWINGS

FIGS. 1 through 4 show aspects of example sensors.

FIG. 5 shows cross sections of three different waveguide-dielectric configurations in planes orthogonal to the waveguides, and corresponding representations of single-mode propagation through the waveguides.

FIG. 6 shows, as a function of the width of an example silicon waveguide, a comparison of the overlap between the fundamental transverse-electric (TE) mode at 1.650 micrometers and a surrounding, gaseous medium.

FIG. 7A shows aspects of an example method for fabricating a sensor.

FIG. 7B shows aspects of selected in-process structures formed according to the method of FIG. 7A.

FIG. 8A shows aspects of another example method for fabricating a sensor.

FIG. 8B shows aspects of selected in-process structures formed according to the method of FIG. 8A.

DETAILED DESCRIPTION

This disclosure presents examples of new optical absorption-sensor technology with long path lengths suitable for trace-gas determinations. In the example sensor configurations here described, probe light is carried from an optical source to a detector along a narrow, elongate waveguide. Arranged on a compact dielectric layer, the waveguide is aggressively curved, such that its total length is much greater than that of the chip area. Although the waveguide and surrounding medium are configured for total internal reflection (TIR) of the probe light, analyte molecules in proximity to the waveguide are excited by the evanescent wave propagating along the exterior of the waveguide. In that manner the probe light is attenuated in proportion to the concentration of the analyte in the medium.

In some examples the waveguide may rest directly on the dielectric layer. In other examples, the dielectric layer may be undercut, to limit the degree to which the evanescent wave is drawn into the dielectric layer, and to expose more of the waveguide to the analyte. In such examples a groove is formed in the dielectric layer, along the path of the waveguide, and a series of ridges is arranged across the groove to support the waveguide.

The disclosed approach offers numerous, beneficial technical effects. Forming the waveguide from semiconductor materials such as silicon or silicon nitride extends the range of usable wavelengths into the infrared (IR), where greenhouse gases such as methane have suitably intense absorption bands. Moreover, such waveguides may be configured to have a compact form factor but very long effective path length, thereby providing high sensitivity for trace-gas determination. Integration of in-coupling and out-coupling windows into the semiconductor waveguide can help to maintain suitably low optical losses, again increasing the sensitivity of the method. Further, the sensors disclosed herein are generally operable without active temperature control, thereby reducing cost and complexity.

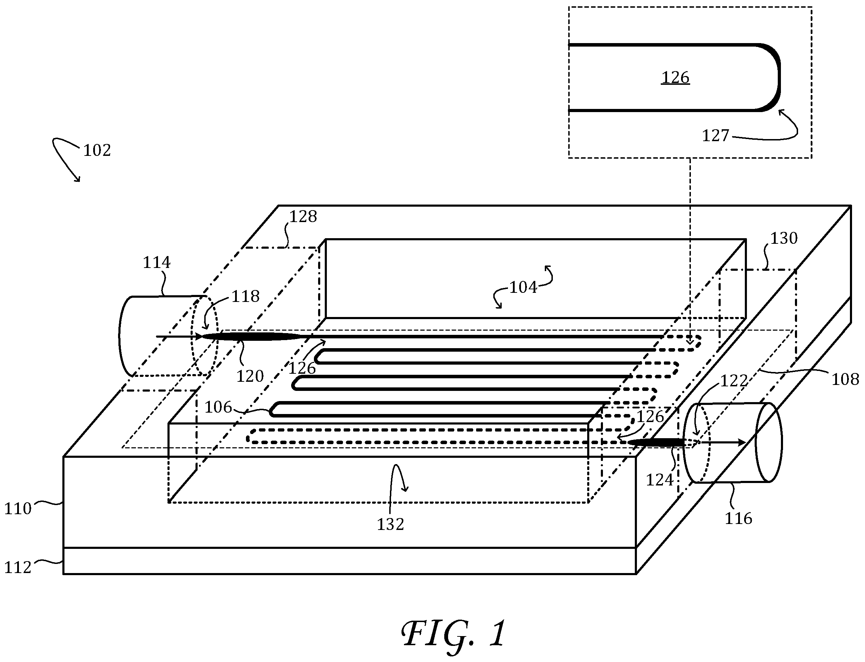

Turning now to the drawings, FIG. 1 shows aspects of an example sensor 102. The sensor is configured to sense at least one analyte in a fluid medium 104. The term 'fluid' refers generally to a gas or a liquid. In some examples and scenarios, the fluid medium may flow over or through the sensor; in other examples and scenarios the fluid medium may be substantially stationary relative to the sensor. The term 'stationary' excludes neither diffusive nor unforced, convective motion of the fluid medium relative to the sensor. In some examples fluid medium 104 corresponds to a portion of the atmosphere of the Earth. In some examples the fluid medium may comprise a gaseous outflow from an industrial or agricultural process. Each analyte envisaged herein is a molecular species miscible in fluid medium 104. In examples in which the fluid medium is a portion of the atmosphere, an analyte may be a trace gas present in the atmosphere. In more particular examples an analyte may comprise methane ($CH_4$), a potent greenhouse gas.

The manner in which a sensor is 'configured to sense' a given analyte may vary depending on the sensor configuration, analyte and/or scenario in which the sensor is being used. In some examples, sensor 102 may be configured to make a quantitative determination of the concentration of an analyte in fluid medium 104. Such a determination may reflect the available resolution of the sensor for the analyte. In other examples and scenarios a sensor may be configured merely to determine whether the concentration of an analyte is above a detection limit of the sensor, or above a pre-determined threshold. In this disclosure the term 'sense' is generic to determinations of both kinds and to combinations thereof.

Continuing in FIG. 1, sensor 102 includes a curved and elongate semiconductor waveguide 106. The waveguide is fully confined to a rectangular area 108 of dielectric layer 110, which physically supports the waveguide. The window in the dielectric layer itself is defined by microlithography and dry etching and is supported (e.g., adherently grown or deposited) on substrate 112.

Sensor 102 includes an optical source 114 and an optical detector 116. Conventionally the 'infrared' (IR) is loosely divided into a plurality of wavelength ranges-e.g., the near infrared (NIR), mid-infrared (MIR), and far infrared (FIR). Via appropriate selection of the source and detector componentry and the bandgap of the waveguide material (vide infra), any, some, or all of these ranges (among others) are accessible to the configurations and methods herein. The source and detector configurations are not particularly limited and may depend on the spectral functionality of the sensor (if any). In the most basic example, sensor 102 is configured to sense only one analyte, or genus of closely related analytes having a characteristic IR absorption band. For instance, the sensor may be configured to sense methane, which has a strong absorption band at around 1.650 $\mu$m and additional absorption bands around 3.300 $\mu$m. In this example, optical source 114 may comprise an IR laser, such as a diode laser, tuned to resonate in a narrow band centered on that wavelength. optical detector 116 may comprise an IR-responsive photodiode, such as a germanium (Ge) photodiode. To improve the signal-to-noise (S/N) ratio of analyte sensing, the optical detector may include a wavelength filter arranged optically upstream of the IR-responsive photodiode. In this example the analyte sensing is based on absorbance sensing in one (potentially narrow) wavelength band.

In other examples, the analyte sensing may be based on absorbance at two or more discrete wavelength bands. Such data can be used ratiometrically to sense a single analyte or genus or could be used to sense two or more different analytes concurrently. In such examples, the optical source may comprise a plurality of lasers tuned to a corresponding plurality of resonance wavelengths, with the emissive output of each laser combined via a beam combiner. In examples in which the lasers are operated in multiplex, optical detector 116 may be configured substantially as described above.

In still other examples, analyte sensing may be based on IR absorption *spectra* acquired via sensor 102. In such examples, spatially or temporally wavelength-dispersive componentry is incorporated into optical source 114 or optical detector 116. For instance, the optical source may comprise a broad-band IR emitter, and the optical detector may comprise a diffraction grating optically upstream of an IR-responsive photodiode array. In other examples, wavelength-dispersive componentry may be incorporated onto the chip (e.g., die) supporting the waveguide. In still other examples, the optical source may comprise a broad-band IR emitter and a moving element (e.g., mirror), to support interferometric, Fourier-transform IR (FTIR) spectroscopy. In such examples the optical detector may comprise a single IR-responsive photodiode with no wavelength dispersion.

Irrespective of the source and detector configurations of sensor 102, in-coupling window 118 is arranged at a first end 120 of waveguide 106 and configured to couple optically to optical source 114. Out-coupling window 122 is arranged at the second end 124 of waveguide 106 and configured to couple optically to optical detector 116. Any suitable couplers can be used. The example couplers of FIG. 1 are illustrative and not intended to be limiting.

Because the probe light is intended to propagate through waveguide 106 without excessive loss, the waveguide is comprised of a material that is substantially transparent in the bands used for analyte sensing, such as IR bands. Moreover, the waveguide material must have a refractive index which is higher than the dielectric layer that surrounds any portion of it. In some examples, therefore, the waveguide may comprise silicon (Si). In some examples the waveguide may comprise silicon nitride ($Si_3N_4$) or germanium (Ge).

Based on geometric optics, light can neither enter nor exit waveguide 106 at angles less than the critical angle $\theta = \arcsin(n_0 / n)$, where $n$ is the refractive index of the waveguide material and $n_0$ is the index of the surrounding medium. In typical examples $n$ has a relatively high value ($n$ = 3.88 for Si, 2.02 for $Si_3N_4$). Moreover, the aggressively curved middle segment 126 of the waveguide is surrounded by fluid medium 104 ($n_0$ = 1.00 for air). Accordingly, the critical angle $\theta$ is large throughout the middle segment, urging the probe light to remain confined despite the curvature. Nevertheless, analyte molecules in proximity to middle segment 126 may readily absorb energy from the evanescent wave of the probe light, which is the basis for the analytical method herein.

The skilled reader will appreciate that the term TIR does not require perfectly lossless propagation of light through waveguide 106, even in the absence of analyte molecules. Manageable propagation losses are expected due to non-zero extinction in the semiconductor and/or bulk and surface defects. In some examples analyte molecules (M) in fluid medium 104 may achieve a dynamic equilibrium with the same analyte molecules sorbed onto the surface of the waveguide,

$$M_{(gas)} \overset{K}{\rightleftharpoons} M_{(sorbed)}.$$

For analytes in which the equilibrium constant K is large, the effective extinction coefficient E may be greater than the gas-phase extinction coefficient, which may further increase the sensitivity of the methods herein.

Returning now to the important feature of path length, waveguide 106 is ribbon-like: the width of the waveguide is greater than its thickness and many orders of magnitude less than its length. The waveguide follows a curved path over dielectric layer 110, such that the total length L of the waveguide is substantially longer than the area 108 to which the waveguide is confined. In some examples L may be at least twice the length of the area. In some examples L may be at least ten times the length of the area. In some examples L may be at least twenty times the length of the area. In some examples L may be more than one-hundred times the length of the area. In the sensory methods herein, the total length L which is exposed to the fluid medium corresponds to the path length in the Beer-Lambert law.

In some examples the area 108 of confinement of waveguide 106 is about 2 millimeters (mm) long by 10 mm wide. An Si waveguide may be 220 nanometers (nm) thick, 400 nm wide, and 10 to 1000 mm in length, for instance, in some examples. Other dimensions are also envisaged, both for Si and other semiconductor materials. Thinness of the waveguide provides some advantages in fabrication (*vide infra*) and also makes it easier to achieve single-mode propagation in the wavelengths of interest. The narrow width makes it possible to confine a relatively long waveguide to a small area, in addition to limiting the available modes of propagation. In multimode operation, different modes may suffer inequivalent losses propagating through the curves of the waveguide. While not essential in every implementation, single-mode operation ensures that such losses are of a fixed, predictable amount, which may reduce analyte detection limits. Moreover, the radial extension of the evanescent wave (i.e., the overlap with the fluid medium) increases as the width of the waveguide decreases. For this reason also, a narrow waveguide helps to improve sensitivity.

In sensor 102 of FIG. 1, waveguide 106 follows a serpentine path over dielectric layer 110 in order to achieving the large aspect ratio indicated above. In other examples the waveguide path may include at least one spiral or semi-spiral segments used to the same effect.

Despite the value of aggressive curvature of waveguide 106, which provides great length and a compact form factor, excessive curvature may result in undesirable optical losses due to leakage of the probe light at sub-critical angles $\theta$. In order to avoid such leakage, the radius of curvature may be kept above a pre-determined threshold at all localities of the waveguide (e.g., where the path direction is reversed). In some examples, the minimum radius of curvature may be about 15 μm. As shown in the inset of FIG. 1, portions of middle segment 126 of especially low radius of curvature, such as corners 127, can be made wider than the straight or less aggressively curved portions of the waveguide, in order to limit optical losses. In other examples, a waveguide may have a different minimum radius of curvature.

Continuing in FIG. 1, dielectric layer 110 of sensor 102 comprises plural dielectric regions. In the illustrated example, the plural dielectric regions include first dielectric region 128, second dielectric region 130, and third dielectric region 132. The first dielectric region supports and encloses the first end 120 of waveguide 106. The second dielectric region supports and encloses second end 124 of waveguide 106. The third dielectric region supports but does not enclose middle segment 126 of the waveguide, thereby leaving the middle segment exposed to fluid medium 104. Accordingly, third dielectric region 132 can be referred to as the 'sensory region' of dielectric layer 110.

In sensor 102, third dielectric region 132 is a recessed, central region of dielectric layer 110. First and second dielectric regions 128 and 130 are peripheral to the third dielectric regions. In some examples, the first and second dielectric regions may extend about 500 to 1000 μm above the third dielectric region. In the example shown in FIG. 1 the first and second dielectric regions are part of a perimeter of the dielectric layer 110, which surrounds the third dielectric region. In other examples, the third dielectric region need not be surrounded in that manner. Indeed the first and second dielectric regions need not be peripheral to the third dielectric region in some alternative configurations.

As shown in FIG. 1, the width of waveguide 106 at first end 120 and second end 124 (which pass through the first and second dielectric regions, respectively) may be greater than the width of middle segment 126 of the waveguide. This feature reduces optical losses as the waveguide passes from dielectric layer 110, which has a much greater refractive index than fluid medium 104, to the area exposed to the fluid medium. Nevertheless, the waveguide width is gradually reduced again to a minimal value on approaching in-coupling window 118 and out-coupling window 122. This configuration is appropriate for edge couplers in silicon photonics. However, the sensors herein may be used with other types of couplers also, such as fiber-grating couplers or micro-lenses, which may not require the width to be reduced on approaching the in- and out-coupling windows. Indeed any in- and out-coupling mechanism may be used that ensures aperture matching to optical source 114 and optical detector 116, thereby avoiding undesired optical losses.

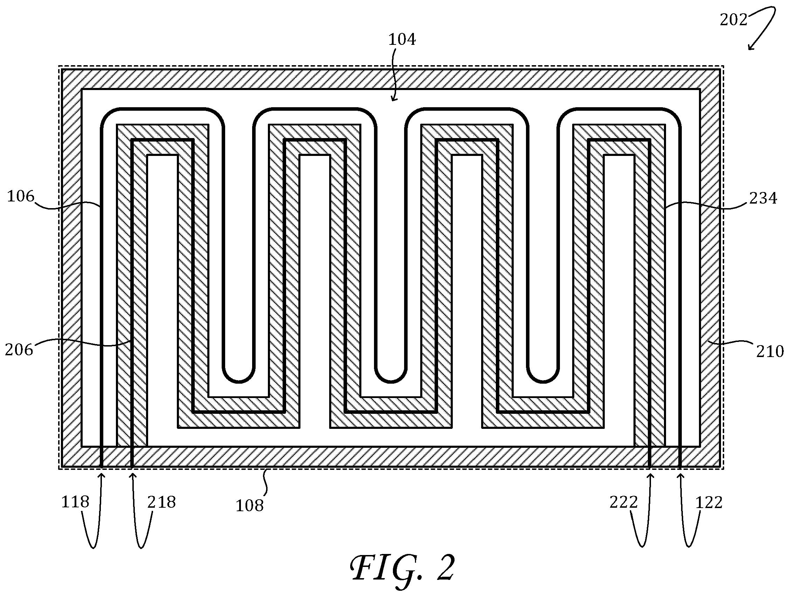

FIG. 2 shows aspects of another example sensor 202 configured to sense at least one analyte in a fluid medium 104. As in the foregoing description, sensor 202 includes a first waveguide 106 arranged on a dielectric layer 210, a first in-coupling window 118, and a first out-coupling window 122. Sensor 202 further comprises a curved and elongate second semiconductor waveguide 206 fully confined to area 108 of the dielectric layer. The first and second waveguides follow adjacent and locally parallel paths over dielectric layer 210. Again, the second waveguide may be much longer than area 108, as described in the context of FIG. 1.

In this configuration, second in-coupling window 218 is arranged at the first end of second waveguide 206 and configured to couple optically to an optical source (not shown in FIG. 2). Second out-coupling window 222 is arranged at the second end of the second waveguide and configured to couple optically to an optical detector (not shown in FIG. 2).

In sensor 202, fourth dielectric region 234 of dielectric layer 210 fully encloses the second waveguide 206. This may enable the optical detector to acquire a reliable, zero analyte-concentration reference, to calibrate for variations in the fabrication of the juxtaposed waveguides-.

In sensor 202, the plural waveguides are arranged in an inner and outer serpentine waveguide pattern. In another example both waveguides may be spirals. Generally speaking, it is not strictly necessary for the dielectric surrounding the waveguides to follow the meander (or spiral) shape of the waveguide. For instance, the dielectric may be patterned in the form of a rectangular block. Covered and un-covered spirals can be next to each other for ease of fabrication, instead of following parallel paths.

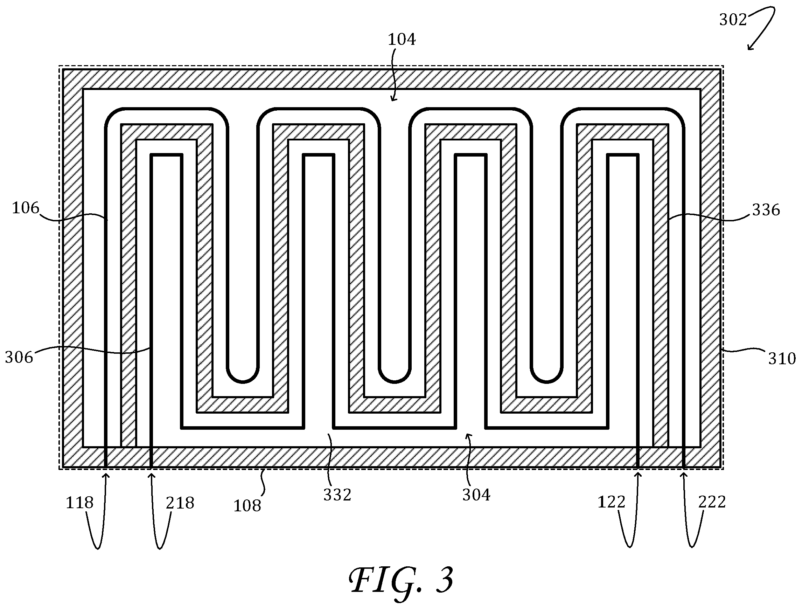

FIG. 3 shows aspects of another example sensor 302 configured to sense at least one analyte in a fluid medium 104. As in the foregoing description, sensor 302 comprises a first waveguide 106 and a second waveguide 306, which follow adjacent and locally parallel paths over dielectric layer 310. In sensor 302, however, the middle segment of second waveguide 306 is immersed not in a dielectric but in a reference fluid medium 304. To that end, sensor 302 further comprises a partition 336 arranged on third dielectric region 332. The partition is configured to fluidically isolate first waveguide 106 from second waveguide 306 and to expose the first waveguide to first, analyte fluid medium 104 and the second waveguide to a second, reference fluid medium 304. In this configuration, acquisition of an IR absorption measurement through second waveguide 306 is akin to measuring a 'solvent blank' whose absorbance value or values are subtracted from corresponding values measured through first waveguide 106. As noted hereinabove, plural waveguides need not be arranged in an inner and outer serpentine waveguide pattern but may be arranged in other patterns instead. A layout of spiral waveguides may facilitate fabrication.

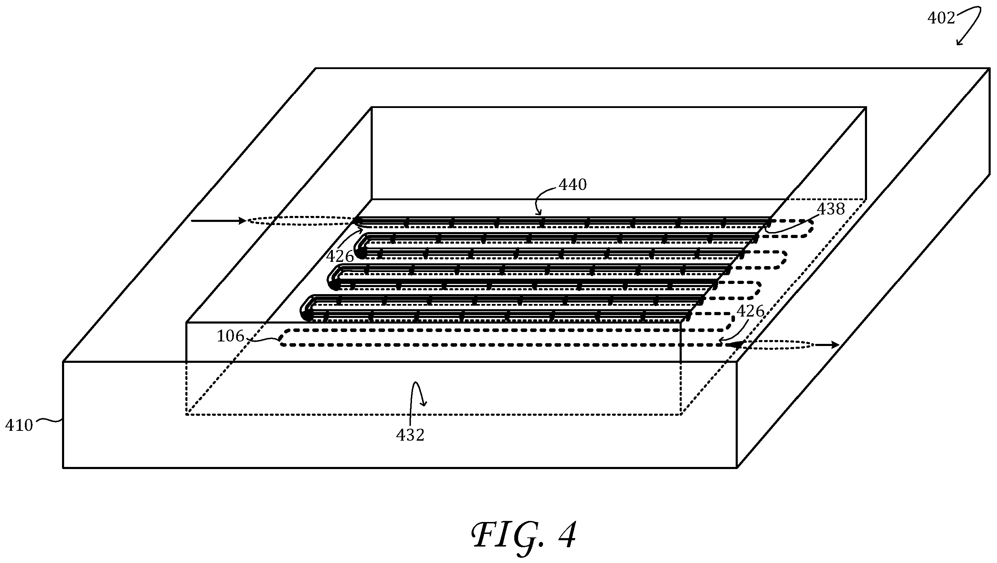

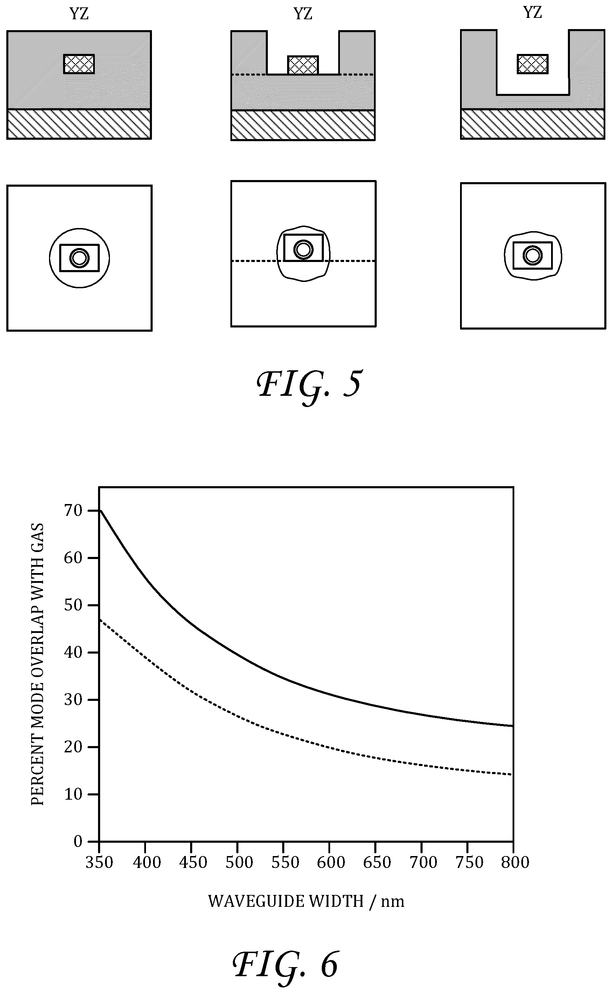

Returning very briefly to FIG. 1, waveguide 106 of sensor 102 is arranged directly and adherently on dielectric layer 110. FIG. 4 shows aspects of another example sensor 402, which differs in that respect. In particular, third dielectric region 432 of sensor 402 comprises a groove 438 formed along the path of the middle segment 426 of the waveguide, over dielectric layer 410. The groove is wider than the waveguide itself, such that the dielectric layer below the middle segment of the waveguide is undercut. Third dielectric region 432 also includes at least one ridge 440 arranged in groove 438. Each ridge extends across the groove, adherently supporting the middle segment of the waveguide despite the undercut. In some examples a series of ridges may be included, distributed along groove 438, spaced evenly or unevenly, supporting any, some, or all portions of the middle segment. Additional advantages of the sensor configuration of FIG. 4 will now be described with reference to FIGS. 5 and 6.

In each column of FIG. 5, the upper graphic represents a cross section of a waveguide-dielectric configuration, where the substrate is hatched, the dielectric layer is shaded, and the waveguide is cross-hatched. In the left-hand column, the waveguide is embedded entirely in the dielectric layer. The lower graphic shows the waveguide as a rectangle and further shows two equi-intensity contours corresponding to single-mode light propagating through the waveguide. In this configuration, the evanescent wave extends significantly and symmetrically into the dielectric layer.

In the middle column of FIG. 5, the waveguide in the upper graphic rests on the interface (dashed line) between the dielectric layer below and the fluid above, as in the sensor of FIG. 1. In the corresponding lower graphic, the equi-intensity contours extend appreciably into the dielectric layer, such that the portion of the evanescent wave penetrating into the fluid medium is rather narrow. Moreover, in this configuration analyte from the fluid medium can approach only three of the four sides of the waveguide.

In the right-hand column of FIG. 5, the waveguide in the upper graphic is far from the dielectric layer and suspended entirely in the fluid medium, as in sensor of FIG. 4. In the corresponding lower graphic, the equi-intensity contours symmetrically circumscribe the waveguide, with the evanescent wave extending into the fluid medium only. Here the analyte from the fluid medium can approach all four sides of the waveguide.

FIG. 6 shows, as a function of the width of a 220-nm thick Si waveguide, a comparison of the overlap between the fundamental TE mode at 1.650 $\mu$m and a surrounding, gaseous medium. The dashed line shows the computed overlap for a waveguide adherently coupled to a dielectric layer, as in FIG. 1. The solid line shows the computed overlap for a waveguide supported on an undercut dielectric layer via a series of ridges, as in FIG. 4.

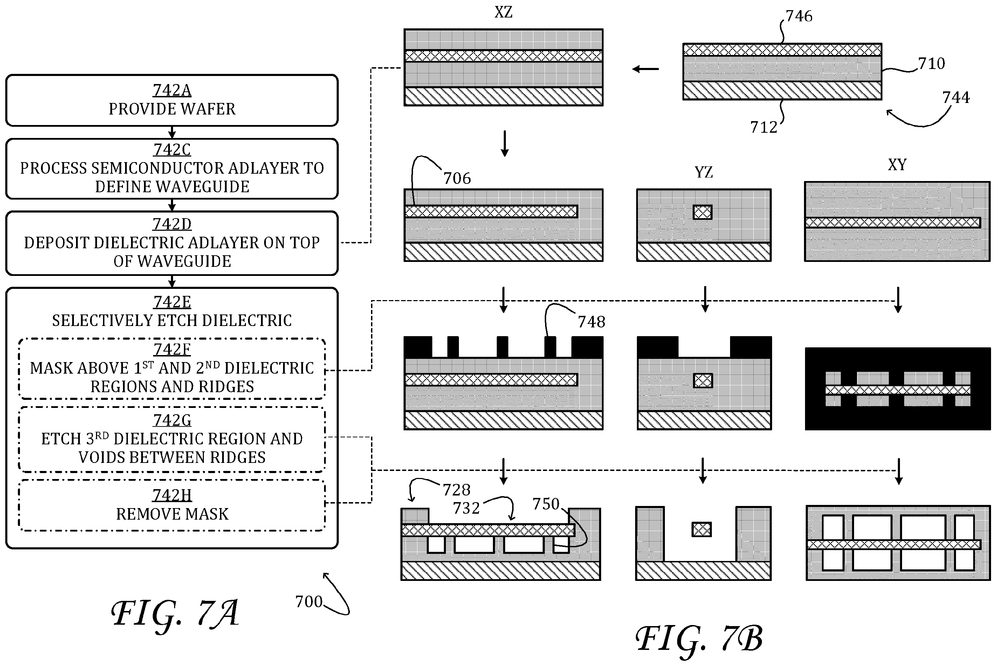

FIG. 7A shows aspects of an example method 700 for fabricating a sensor as described hereinabove. The method is illustrated with additional reference to companion FIG. 7B, which shows aspects of selected in-process structures.

At 742A of method 700 a wafer 744 is provided. Wafer 744 comprises a semiconductor substrate 712, a dielectric layer 710 adherently grown or deposited on the substrate, and a semiconductor adlayer 746 adherently grown or deposited on the dielectric layer. Wafer configurations of this kind are known in the field of semiconductor photonics. In examples in which the semiconductor is silicon, such a wafer is called a 'silicon-on-insulator' (SOI) wafer. Waveguide 706 may be formed via any suitable microlithographic processing applied to the semiconductor adlayer (*vide infra*). The in-process structures in the XZ-labeled column of FIG. 7B show a cross section down through the wafer (direction Z) and along a portion of the middle segment of the waveguide (direction X). The in-process structures in the YZ-labeled column show a cross section down through the wafer (direction Z) and perpendicular to the portion of the middle segment (direction Y). The in-process structures in the XY labeled column show a top view of a rectangular portion of the wafer parallel to the waveguide. In some examples the thickness of the semiconductor adlayer may be about 220 nm.

At 742C suitable microlithographic processing is applied to semiconductor adlayer 746 in order to define a curved and elongate semiconductor waveguide 706. Such processing may comprise at least one photolithographic process. In some examples such processing comprises leaving the first and second ends of the waveguide (viz., the areas above first and second dielectric regions) wider than the middle segment of the waveguide. In some examples the in-coupling and out-coupling windows of the waveguide are made very narrow. The semiconductor waveguide 706 formed in this manner is, as noted hereinabove, fully confined to an area of dielectric layer 710 and, in some examples, can be much longer than the area. An in-coupling window is arranged at a first end of the waveguide and is configured to couple optically to an optical source. An out-coupling window is arranged at a second end of the waveguide and is configured to couple optically to an optical detector. At 742D a dielectric layer is deposited on top of the waveguide. In some examples, plasma-enhanced chemical vapor deposition (PECVD) may be used to deposit the dielectric layer, which encapsulates *inter alia* the first and second ends of the waveguide.

At 742E dielectric layer 710, as deposited at 742D, is selectively etched to further define a plurality of in-process structures. The structures formed by selective etching at 742E include first dielectric region 728, third dielectric region 732, and second dielectric region (not shown in FIG. 7B but related by symmetry to first dielectric region 728). The first dielectric region supports and encloses the first end of the waveguide, and the second dielectric region supports and encloses the second end of the waveguide. As noted hereinabove, the first and second dielectric regions can be full-thickness, peripheral and/or perimeter regions, in some examples. The third dielectric region supports but does not enclose the middle segment of the waveguide. The third dielectric region can be a recessed, central, and/or sensory region, in some examples.

The processing methods herein admit of numerous variants. One high-level bifurcation of the variants concerns whether the waveguide rests adherently on the dielectric layer (as in FIG. 1) or is supported by a series of ridges over an undercut in the dielectric layer (as in FIG. 6). In examples in which the waveguide is supported by ridges, another bifurcation of the variants concerns whether the undercut and ridges are formed during the selective etching at 742D or in subsequent processing.

Accordingly, in method 700, selective etching at 742E may include the optional operations of masking, at 742F, areas 748 above the first and second dielectric regions and above the ridges; applying, at 742G, a dielectric etch to etch the third region and voids between the ridges, thereby undercutting the middle portion of the waveguide; and removing the mask at 742H.

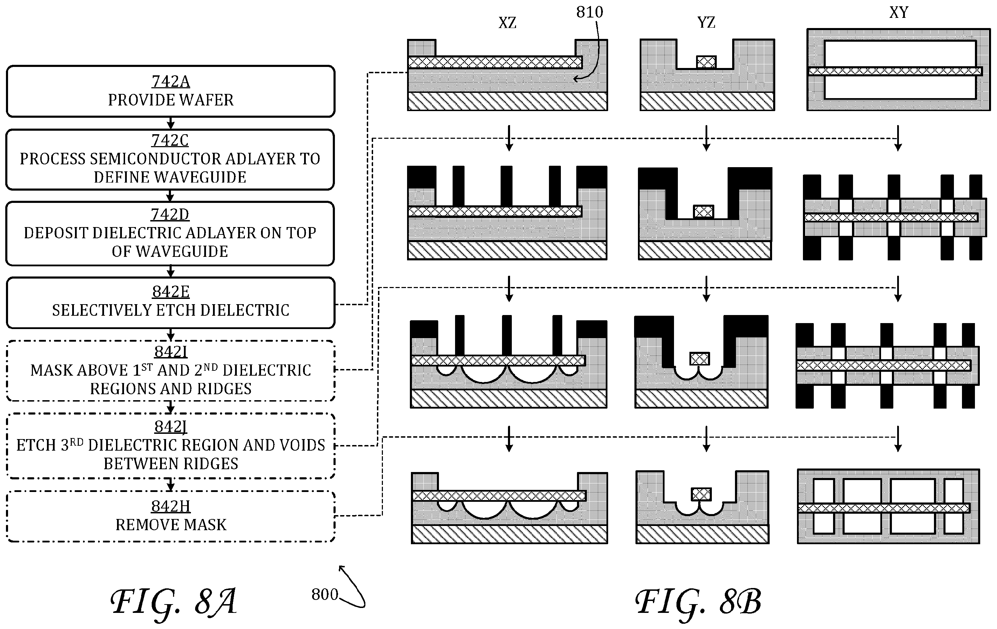

FIG. 8A shows aspects of another example method 800 for fabricating a sensor as described hereinabove. The method is illustrated with additional reference to companion FIG. 8B, which shows aspects of selected in-process structures. In method 800 processing analogous to 742F through 742H of method 700 is enacted after selective etching of the dielectric layer to form the first, second, and third dielectric regions.

At 742A of method 800 a wafer 744 is provided. At 742C suitable microlithographic processing is applied to semiconductor adlayer 746 in order to define the waveguide. At 742D a dielectric layer is deposited on top of the waveguide

At 842E dielectric layer 810, as deposited at 742D, is selectively etched to further define a plurality of in-process structures-e.g., to form a window for exposing the waveguide to the fluid medium in the fabricated sensor. The structures formed by selective etching at 742E include first dielectric region 728, third dielectric region 732, and second dielectric region (not shown in FIG. 8B but related by symmetry to first dielectric region 728).

In examples in which the waveguide is supported by ridges, method 800 may optionally include, at 842I, re-masking areas above the first and second dielectric regions and masking areas above the ridges; applying, at 842J, a dielectric undercut etch to etch the voids between the ridges, thereby undercutting the middle portion of the waveguide; and removing the mask, at 842H.

No aspect of the foregoing drawings or description should be interpreted in a limiting sense, because numerous variations, extensions, and omissions are also envisaged. For instance, the description above emphasizes analyte sensing via IR attenuation primarily because certain trace gases of interest have strong and characteristic absorption bands in the IR. However, the configurations and methods herein apply also to sensors operable in other regions of the electromagnetic spectrum-e.g., the ultraviolet and visible regions. In such examples the source and detector componentry would be modified accordingly, and the waveguide would comprise material of a correspondingly wider bandgap, to minimize absorption losses.

In FIG. 4, the middle segment of the waveguide is suspended over a groove (a void space in the third dielectric region) which follows the shape of the middle segment. There the waveguide is supported by a series of ridges that bridge the groove. In other examples, more extensive etching of the third dielectric region may define a series of pillars (i.e., columns) instead of ridges, which support the waveguide over a dielectric of any contour (e.g., absent a shape-following groove). Generally speaking, the middle segment of the waveguide may be suspended via any suitable configuration defined by a dielectric-etch pattern.

This disclosure is presented by way of example and with reference to the attached drawing figures. Components, process steps, and other elements that may be substantially the same in one or more of the figures are identified coordinately and described with minimal repetition. It will be noted, however, that elements identified coordinately may also differ to some degree. It will be further noted that the figures are schematic and generally not drawn to scale. Rather, the various drawing scales, aspect ratios, and numbers of components shown in the figures may be purposely distorted to make certain features or relationships easier to see.

In conclusion, one aspect of this disclosure is directed to a sensor for sensing an analyte in a fluid medium. The sensor comprises: (a) a dielectric layer; (b) a curved and elongate semiconductor waveguide confined to an area of the dielectric layer, and the waveguide is at least twenty times as long as the area; (c) an in-coupling window arranged at a first end of the waveguide and configured to couple optically to an optical source; and (d) an out-coupling window arranged at a second end of the waveguide and configured to couple optically to an optical detector.

In some implementations the waveguide comprises silicon, silicon nitride, or germanium. In some implementations the waveguide is arranged adherently on the dielectric layer. In some implementations the dielectric layer comprises: a first dielectric region that supports and encloses the first end of the waveguide; a second dielectric region that supports and encloses the second end of the waveguide; and a third dielectric region that supports but does not enclose a middle segment of the waveguide, thereby leaving the middle segment exposed to a fluid medium. In some implementations a width of the waveguide within the first and second dielectric regions is greater than the width of the middle segment of the waveguide, where sensing occurs. In some implementations the third dielectric region comprises: a groove, wider than the waveguide, formed along a path of the middle segment of the waveguide over the dielectric layer; and a series of ridges distributed along the groove, each ridge extending across the groove, adherently supporting the middle segment of the waveguide. In some implementations the waveguide is a first waveguide, the in-coupling window is a first in-coupling window, and the out-coupling window is a first out-coupling window, the sensor further comprising: a curved and elongate second semiconductor waveguide confined to the area of the dielectric layer; a second in-coupling window arranged at a first end of the second waveguide and configured to couple optically to the optical source; and a second out-coupling window arranged at a second end of the second waveguide and configured to couple optically to the optical detector. In some implementations the dielectric layer fully encloses the second waveguide. In some implementations the fluid medium is a first fluid medium, the sensor further comprising a partition arranged on the third dielectric region and configured to fluidically isolate the first waveguide from the second waveguide and to expose the first waveguide to the first fluid medium and the second waveguide to a second fluid medium.

Another aspect of this disclosure is directed to a method for fabricating a sensor for sensing an analyte in a fluid medium. The method comprises: (a) providing a wafer comprising a substrate, a dielectric layer on the substrate, and a semiconductor adlayer on the dielectric layer; (b) enacting microlithographic processing of the semiconductor adlayer to define: (i) a curved and elongate semiconductor waveguide confined to the dielectric layer, (ii) an in-coupling window arranged at a first end of the waveguide and configured to couple optically to an optical source, and (iii) an out-coupling window arranged at a second end of the waveguide and configured to couple optically to an optical detector; and (c) selectively etching the dielectric layer to define: (i) a first dielectric region that supports and encloses the first end of the waveguide; (ii) a second dielectric region that supports and encloses the second end of the waveguide; and (iii) a third dielectric region that supports but does not enclose a middle segment of the waveguide, to suspend the middle segment of the waveguide.

In some implementations the method further comprises reducing the semiconductor adlayer to a predetermined thickness prior to the microlithographic processing. In some implementations predetermined thickness is about 220 nanometers. In some implementations the microlithographic processing comprises leaving the waveguide wider above first and second dielectric regions than in the middle segment. In some implementations the selective etching the dielectric layer comprises: masking areas above the first and second dielectric regions and above the ridges; applying a dielectric etch to etch the third region and voids between the ridges, thereby undercutting the middle portion of the waveguide; and removing the mask. In some implementations the method further comprises: re-masking areas above the first and second dielectric regions; masking areas above the ridges; applying a dielectric undercut etch to etch voids between the ridges, thereby undercutting the middle portion of the waveguide; and removing the mask.

Another aspect of this disclosure is directed to a sensor for sensing an analyte in a fluid medium. The sensor comprises: (a) a curved and elongate semiconductor waveguide; (b) an in-coupling window arranged at a first end of the waveguide and configured to couple optically to an optical source; (c) an out-coupling window arranged at a second end of the waveguide and configured to couple optically to an optical detector; and (d) a dielectric layer including: (i) a sensory region that supports but does not enclose a middle segment of the waveguide, (ii) a groove, wider than the waveguide, formed along a path of the middle segment of the waveguide over the sensory region, and (iii) at least one ridge arranged in the groove, each ridge extending across the groove, adherently supporting the middle segment of the waveguide.

In some implementations the sensory region is a third dielectric region, the dielectric layer further comprising: a first dielectric region that supports and encloses the first end of the waveguide; and a second dielectric region that supports and encloses the second end of the waveguide. In some implementations the waveguide is confined to an area of the dielectric layer, and the waveguide is at least twenty times as long as the area. In some implementations a width of the waveguide within the first and second dielectric regions is greater than the width of the middle segment of the waveguide. In some implementations the waveguide comprises silicon, silicon nitride, or germanium.

It will be understood that the configurations and/or approaches described herein are exemplary and that these specific embodiments or examples are not to be considered in a limiting sense, because numerous variations are possible. The specific routines or methods described herein may represent at least one of any number of processing strategies. As such, various acts illustrated and/or described may be performed in the sequence illustrated and/or described, in other sequences, in parallel, or omitted. Likewise, the order of the above-described processes may be changed. In that spirit, the phrase 'based at least partly on' is intended to remind the reader that the functional and/or conditional logic illustrated herein neither requires nor excludes suitable additional logic, executing in combination with the illustrated logic, to provide additional benefits.

The subject matter of the present disclosure includes all novel and non-obvious combinations and sub-combinations of the various processes, systems and configurations, and other features, functions, acts, and/or properties disclosed herein, as well as any and all equivalents thereof.

**Claims**

1. A sensor (102, 202, 302, 402) for sensing an analyte in a fluid medium (104, 304), the sensor comprising:

   a dielectric layer (110, 210, 310, 410);
   a curved and elongate semiconductor waveguide (106, 206, 306, 706) confined to an area (108) of the dielectric layer, wherein the waveguide is at least twenty times as long as the area;
   an in-coupling window (118, 218) arranged at a first end (120) of the waveguide and configured to couple optically to an optical source (114); and
   an out-coupling window (122, 222) arranged at a second end (124) of the waveguide and configured to couple optically to an optical detector (116).

2. The sensor of claim 1 wherein the waveguide comprises silicon, silicon nitride, or germanium.

3. The sensor of wherein the waveguide is arranged adherently on the dielectric layer.

4. The sensor of any preceding claim wherein the dielectric layer comprises:

   a first dielectric region that supports and encloses the first end of the waveguide;
   a second dielectric region that supports and encloses the second end of the waveguide; and
   a third dielectric region that supports but does not enclose a middle segment of the waveguide, thereby leaving the middle segment exposed to a fluid medium.

5. The sensor of claim 4 wherein a width of the waveguide within the first and second dielectric regions is greater than the width of the middle segment of the waveguide, where sensing occurs, or wherein the third dielectric region comprises:

   a groove, wider than the waveguide, formed along a path of the middle segment of the waveguide over the dielectric layer; and
   a series of ridges distributed along the groove, each ridge extending across the groove, adherently supporting the middle segment of the waveguide.

6. The sensor of claim 4 or claim 5, wherein the waveguide is a first waveguide, the in-coupling window is a first in-coupling window, and the out-coupling window is a first out-coupling window, the sensor further comprising:

   a curved and elongate second semiconductor waveguide confined to the area of the dielectric layer;
   a second in-coupling window arranged at a first end of the second waveguide and configured to couple optically to the optical source; and
   a second out-coupling window arranged at a second end of the second waveguide and configured to couple optically to the optical detector.

7. The sensor of claim 6 wherein the dielectric layer fully encloses the second waveguide.

8. The sensor of claim 6 or claim 7 wherein the fluid medium is a first fluid medium, the sensor further comprising a partition arranged on the third dielectric region and configured to fluidically isolate the first waveguide from the second waveguide and to expose the first waveguide to the first fluid medium and the second waveguide to a second fluid medium.

9. A method (700, 800) for fabricating a sensor (102, 202, 302, 402) for sensing an analyte in a fluid medium (104, 304), the method comprising:

   providing (742A) a wafer (744) comprising a substrate (112, 712), a dielectric layer (110, 210, 310, 410, 710) on the substrate, and a semiconductor adlayer (746) on the dielectric layer;
   enacting (742C) microlithographic processing of the semiconductor adlayer to define:

   a curved and elongate semiconductor waveguide (106, 206, 306, 706) confined to the dielectric layer,
   an in-coupling window (118, 218) arranged at a first end (120) of the waveguide and configured to couple optically to an optical source (114), and
   an out-coupling window (122, 222) arranged at a second end (124) of the waveguide and configured to couple optically to an optical detector (116); and

   selectively etching (742E) the dielectric layer to define:

   a first dielectric region (128) that supports and encloses the first end of the waveguide;
   a second dielectric region (130) that supports and encloses the second end of the waveguide; and
   a third dielectric region (132) that supports but does not enclose a middle segment (126) of the waveguide, to suspend the middle segment of the waveguide.

10. The method of claim 9 wherein the microlithographic processing comprises leaving the waveguide wider above first and second dielectric regions than in the middle segment, or wherein the selective etching the dielectric layer comprises: masking areas above the first and second dielectric regions and above the ridges; applying a dielectric etch to etch the third region and voids between the ridges, thereby undercutting the middle portion of the waveguide; and removing the mask.

11. The method of claim 9 or 10 further comprising:

reducing the semiconductor adlayer to a predetermined thickness prior to the microlithographic processing; or
re-masking areas above the first and second dielectric regions;
masking areas above the ridges;
applying a dielectric undercut etch to etch voids between the ridges, thereby undercutting the middle portion of the waveguide; and
removing the mask.

12. A sensor (102, 202, 302, 402) for sensing an analyte in a fluid medium (104, 304), the sensor comprising:

a curved and elongate semiconductor waveguide (106, 206, 306, 706);
an in-coupling window (118, 218) arranged at a first end (120) of the waveguide and configured to couple optically to an optical source;
an out-coupling window (118, 218) arranged at a second end (120) of the waveguide and configured to couple optically to an optical detector (116); and
a dielectric layer (110, 210, 310, 410) including:

a sensory region (132) that supports but does not enclose a middle segment (126) of the waveguide,
a groove (438), wider than the waveguide, formed along a path of the middle segment of the waveguide over the sensory region, and
at least one ridge (440) arranged in the groove, each ridge extending across the groove, adherently supporting the middle segment of the waveguide.

13. The sensor of claim 12 wherein the sensory region is a third dielectric region, the dielectric layer further comprising:

a first dielectric region that supports and encloses the first end of the waveguide; and
a second dielectric region that supports and encloses the second end of the waveguide.

14. The sensor of claim 12 or claim 13 wherein the waveguide is confined to an area of the dielectric layer, and wherein the waveguide is at least twenty times as long as the area, or wherein a width of the waveguide within the first and second dielectric regions is greater than the width of the middle segment of the waveguide.

15. The sensor of claim 12, claim 13 or claim 14 wherein the waveguide comprises silicon, silicon nitride, or germanium.

FIG. 1

*FIG. 2*

EP 4 692 765 A1

FIG. 3

EP 4 692 765 A1

*FIG. 4*

YZ YZ YZ

## FIG. 5

## FIG. 6

XZ

746
710
712
744

742A
PROVIDE WAFER

742C
PROCESS SEMICONDUCTOR ADLAYER TO
DEFINE WAVEGUIDE

742D
DEPOSIT DIELECTRIC ADLAYER ON TOP
OF WAVEGUIDE

706

YZ

XY

742E
SELECTIVELY ETCH DIELECTRIC

742F
MASK ABOVE 1ST AND 2ND DIELECTRIC
REGIONS AND RIDGES

748

742G
ETCH 3RD DIELECTRIC REGION AND
VOIDS BETWEEN RIDGES

742H
REMOVE MASK

728
732
750

*FIG. 7A*    700

*FIG. 7B*

FIG. 8B

FIG. 8A

742A PROVIDE WAFER

742C PROCESS SEMICONDUCTOR ADLAYER TO DEFINE WAVEGUIDE

742D DEPOSIT DIELECTRIC ADLAYER ON TOP OF WAVEGUIDE

842E SELECTIVELY ETCH DIELECTRIC

842I MASK ABOVE 1ST AND 2ND DIELECTRIC REGIONS AND RIDGES

842J ETCH 3RD DIELECTRIC REGION AND VOIDS BETWEEN RIDGES

842H REMOVE MASK

Europäisches
Patentamt

European
Patent Office

Office européen
des brevets

# EUROPEAN SEARCH REPORT

**Application Number**

EP 25 19 4639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIEBERT R ET AL: "Infrared integrated optical evanescent field sensor for gas analysis - Part I: System design", SENSORS AND ACTUATORS A: PHYSICAL, ELSEVIER BV, NL, vol. 119, no. 1, 28 March 2005 (2005-03-28), pages 138-149, XP004819072, ISSN: 0924-4247, DOI: 10.1016/J.SNA.2004.11.001 * abstract; sections 1. and 3.; figures 2,4,11 * | 1,2,4,5, 8-15 | INV.<br>G01N21/552<br>G02B6/122 |
| X | & SIEBERT R ET AL: "Infrared integrated optical evanescent field sensor for gas analysis - Part II. Fabrication", SENSORS AND ACTUATORS A: PHYSICAL, ELSEVIER BV, NL, vol. 119, no. 2, 13 April 2005 (2005-04-13), pages 584-592, XP004852202, ISSN: 0924-4247, DOI: 10.1016/J.SNA.2004.09.020 * abstract; figures 2,4,8,9,13 * | 1,2,4,5, 8-15 | |
| X | ----- US 2020/400883 A1 (LAPLATINE LOÏC [FR] ET AL) 24 December 2020 (2020-12-24)<br><br>* paragraphs [0054], [0063], [0069], [0075] - [0077]; figures 1A, 1B, 2A, 2B,5,6 * | 1-6, 8-10,12, 13 | |
| X | ----- US 5 394 239 A (VALETTE SERGE [FR]) 28 February 1995 (1995-02-28) * col. 3, lines 22-35; col. 6, lines 14-17; figures 1,2,5,10 * | 1-10, 12-15 | |
| | ----- -/-- | | |

**TECHNICAL FIELDS SEARCHED (IPC)**

G01N
G02B

The present search report has been drawn up for all claims

| Place of search | Date of completion of the search | Examiner |
|---|---|---|
| Munich | 16 December 2025 | Weinberger, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 19 4639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/165342 A1 (PAU STANLEY [US] ET AL) 27 July 2006 (2006-07-27) * paragraphs [0028], [0036], [0042]; figures 2,14,18 * ----- | 1,2,9, 12-14 | |
| A | US 2022/334058 A1 (OTTONELLO BRIANO FLORIA [SE] ET AL) 20 October 2022 (2022-10-20) * paragraph [0186]; figure 7 * ----- | 5,10,12 | |

TECHNICAL FIELDS
SEARCHED      (IPC)

The present search report has been drawn up for all claims

| Place of search | Date of completion of the search | Examiner |
|---|---|---|
| Munich | 16 December 2025 | Weinberger, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 19 4639

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2025

| Patent document cited in search report | | | Publication date | Patent family member(s) | | | Publication date |
|---|---|---|---|---|---|---|---|
| US | 2020400883 | A1 | 24-12-2020 | EP | 3754326 | A1 | 23-12-2020 |
| | | | | FR | 3097640 | A1 | 25-12-2020 |
| | | | | US | 2020400883 | A1 | 24-12-2020 |
| US | 5394239 | A | 28-02-1995 | DE | 69315766 | T2 | 18-06-1998 |
| | | | | EP | 0584005 | A1 | 23-02-1994 |
| | | | | FR | 2694630 | A1 | 11-02-1994 |
| | | | | JP | H06160276 | A | 07-06-1994 |
| | | | | US | 5394239 | A | 28-02-1995 |
| US | 2006165342 | A1 | 27-07-2006 | NONE | | | |
| US | 2022334058 | A1 | 20-10-2022 | CN | 114502946 | A | 13-05-2022 |
| | | | | EP | 4042143 | A1 | 17-08-2022 |
| | | | | US | 2022334058 | A1 | 20-10-2022 |
| | | | | WO | 2021066721 | A1 | 08-04-2021 |

EPO FORM P0459

For more details about this annex : see Official Journal of the European Patent Office, No. 12/82